(19) Europäisches Patentamt
European Patent Office
Office européen des brevets

(11) EP 4 286 035 B1

(12) **EUROPEAN PATENT SPECIFICATION**

(45) Date of publication and mention of the grant of the patent:
**02.07.2025 Bulletin 2025/27**

(21) Application number: **21722271.0**

(22) Date of filing: **27.01.2021**

(51) International Patent Classification (IPC):
***B01D 69/10*** (2006.01) ***B01D 71/02*** (2006.01)
***B01D 69/02*** (2006.01) ***B01D 71/70*** (2006.01)
***B01D 71/26*** (2006.01) ***B01D 69/14*** (2006.01)
***B01D 67/00*** (2006.01) ***B01D 69/12*** (2006.01)

(52) Cooperative Patent Classification (CPC):
**B01D 69/12; B01D 67/0088; B01D 67/009; B01D 69/02; B01D 69/107; B01D 69/141; B01D 71/0211; B01D 71/262; B01D 71/70;**
B01D 2323/02; B01D 2323/218; B01D 2323/345; B01D 2325/36

(86) International application number:
**PCT/ES2021/070060**

(87) International publication number:
**WO 2022/162251 (04.08.2022 Gazette 2022/31)**

(54) **POLYPROPYLENE (PP) MEMBRANE COATED WITH AN ORGANOMETHOXYSILANE, METHOD FOR MANUFACTURING SAME AND USES THEREOF**

MIT ORGANOMETHOXYSILAN BESCHICHTETE POLYPROPYLEN (PP)-MEMBRAN, VERFAHREN ZU IHRER HERSTELLUNG UND IHRE VERWENDUNG

MEMBRANE DE POLYPROPYLÈNE RECOUVERTE D'UN ORGANOMÉTHOXYSILANE, SON PROCÉDÉ DE FABRICATION ET SES UTILISATIONS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**06.12.2023 Bulletin 2023/49**

(73) Proprietors:
- **Fundació Institut de Ciències Fotòniques 08860 Castelldefels (ES)**
- **Institució Catalana De Recerca I Estudis Avançats (ICREA) 08010 Barcelona (ES)**
- **Acsa Orbas e Infraestructuras S.A.U. 08041 Barcelona (ES)**

(72) Inventors:
- **PRUNERI, Valerio 08860 CASTELLDEFELS (ES)**
- **PÉREZ CORONADO, Ana Maria 08860 CASTELLDEFELS (ES)**
- **ROMBAUT SEGARRA, Juan 08860 CASTELLDEFELS (ES)**
- **CORZO GARCÍA, Beatriz 08041 BARCELONA (ES)**

(74) Representative: **Ponti & Partners, S.L.P Edifici PRISMA Av. Diagonal núm. 611-613, Planta 2 08028 Barcelona (ES)**

(56) References cited:
**CN-A- 107 349 797**
**US-A1- 2015 265 977**
**US-A1- 2020 338 554**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 286 035 B1

## Description

### Field of the invention

The present invention relates to an improved coated polypropylene membrane with high permeability capacity for liquids, in particular water. The present invention also relates to a method for manufacturing said membrane and uses thereof.

### Background of the invention

Wastewaters from domestic and industrial needs are characterized by relative high values of chemical oxygen demand (COD), suspended solids, fats, oil and detergents.

The membrane technology for wastewater has been increasingly studied to develop affordable and efficient solutions. Generally, polymeric membranes for filtration processes are used in order to achieve clear permeate. Membranes made of polymers like polypropylene (PP), polyvinylidine fluoride (PVDF), polyethersulfone (PES), polyacrylonitrile (PAN), polysulfone (PSf) and chlorinated polyethylene (CPE) have an excellent selectivity in water treatment applications. Furthermore they have good chemical and mechanical stability. However, they typically show limited permeability because of their hydrophobic nature. As a consequence, the cost of water flux and treatment is increased due to the fact that more energy is necessary for pumping in order to achieve the filtration.

Modification of membranes to increase permeability while still preserving filtration efficiency can be carried out by blending polymers having suitable properties, e.g. hydrophilic coating, by combination of different organic compounds, like surfactants or organic solvents, or by addition of polymer layers on the active surface of membrane. From a manufacturing point of view, different methods for modifying the membrane surface are employed, like drop-coating, dip-coating, spray-coating, plasma treatment, etc. Among all methods, dip-coating is certainly a straightforward technique for modifying a membrane surface.

Different inorganic nanomaterials have been studied to enhance the performance of membranes, such as zeolites [3], titanium dioxide [3], magnesium titanium oxide [1], silicon dioxide [8], zirconia [9], and titanate [13]. These materials modify the structures and chemical composition of membrane, exhibiting improved surface hydrophilicity, charge, antifouling, salt rejection and anti-scaling and antibacterial properties. Other authors, e.g. Wang et al. [17], found that sodium maleate (NaMA) and vinil silicone oil (Vi-PDMS) improve the flux of water or oil when they were grafted into PP (polypropylene) pores from UF (ultrafiltration) membranes by using microwave heating, a selective heating method.

In other researches, modification of PP membrane was achieved by employing nanoparticles and hydrophilic additives [11, 14, 16]. In addition, among the additives, ZnO has increasingly been used since it showed good antibacterial and antimicrobial properties. In this way, Wenten et al. [18] improved the flux of water and reduced organic fouling when PP membrane prepared by a coating of PSf/PEG400/ZnO via dip-coating was employed in peat water treatment.

It is thus known in the prior art the use of hydrophilic coating to increase water permeability of hydrophobic membranes.

US10472769B2 [15] discloses porous substrate materials made of ceramics having extreme wettability to polar or non-polar fluids, such as water and oil. The porous material has a coated surface comprising a low surface energy fluoroalkyl silane that is treated to exhibit at least one type of extreme wettability, wherein the low surface energy fluoroalkyl silane is selected from a group consisting of: heptadecafluoro-1,1,2,2-tetrahydrodecyl triethoxysilane, heptadecafluoro-1,1,2,2-tetrahydrodecyl trichlorosilane, heptadecafluoro-1,1,2,2-tetrahydrooctyl trichlorosilane, tridecafluoro-1,1,2,2-tetrahydrooctyl triethoxysilane, and nonafluorohexyl triethoxysilane, and combinations thereof.

CN107519768B [20] discloses a membrane made of ceramics with its surface grafted by a hydrophilic polymer. In addition, during the membrane manufacturing, different binders are used like propyl trimethoxy silane coupling agent, polyvinyl alcohol, polyvinyl butyral, epoxy resin, one or more of acrylic resin, and polyurethane.

US9415351 [19] discloses a method of manufacturing reverse osmosis membranes having a high permeation flux. The membrane includes: a porous support and a polyamide active layer formed on the porous support and including zeolite, modified on the surface with a compound having at least one functional group selected from a group consisting of an amino group and a glycidyl group.

US7264728B2 [6] discloses the use of silane-modified silica filter media such as rice hull ash for separating protein and capturing particulates, simultaneously. The object of this disclosure is to filter a sample through filter media whose surface has been modified with one or more silanes. The disclosed methods allow simultaneously to capture the particulate by filtration and bind soluble materials onto the silica filter media.

WO1999020378A1 discloses a manufacturing method of a composite membrane having a hydrophilic coating layer on hydrophobic support membrane. In particular, the hydrophobic support membrane is immersed in an aqueous solution containing hydrophilic polymer. The support membrane is used for increasing the mechanical resistance and durability of the filter membrane.

CN106310958B [2] discloses polyvinylidene fluoride (PVDF) and polysulfone (PSf) membranes with pore sizes of 0.2 μm coated with specific amino silanes: 3-aminopropyl triethoxy silane, 3-aminopropyl trimethoxy silane, aminoethyl aminopropyl triethoxy silane, aminoethyl aminopropyl trimethoxy silane, and different thiol-silanes such as 3-mercaptopropyl triethoxy silane, 3-mercapto propyl trimethoxy silane, which change the hydrophobic properties of the composite film. Additionally, a tannin solution is employed to adjust the pH between 7 and 8.

CN107349797 A discloses a hydrophilic polypropylene membrane comprising a polymeric microporous membrane coated with a hydrophilic coating of vinyltrimethoxysilane and inorganic particles.

US2015/265977 A1 discloses a hydrophilic coated membrane for water treatment. The membrane coating comprises organomethoxysilanes.

Among the substrate materials, PP is one of the most favourable candidates for membranes thanks to its availability, easy processing, durability and low cost, and has been widely used for ultrafiltration (UF) [17]. However, PP, as mentioned above, have limitations in water treatment due to poor hydrophilic property [4, 10]. To overcome this problem, it was reported that polymerization with hydrophilic monomers can be used for modifying supporting PP substrates in thin film composite membranes [7]. For achieving durable and high permeability, chemical affinity between hydrophilic coating and membrane or membrane's substrate is essential. This is especially applicable to the case where PP is membrane material and not only support material.

Accordingly, the present inventors have found that a polypropylene (PP) membrane coated with organomethoxysilane overcomes the drawbacks disclosed in the state of the art and, in particular, has a high permeability capacity for liquids, in particular water.

## Summary of the invention

In a first aspect, the present invention relates to a polypropylene (PP) membrane coated with an organomethoxysilane alone or combined with oxide particulates according to claim 1.

In a second aspect, the present invention relates to a method for manufacturing the polypropylene membrane according to the first aspect of the invention.

In a third aspect, the present invention relates to a device comprising the polypropylene membrane according to the first aspect of the invention.

In a fourth aspect, the present invention relates to different uses of the polypropylene membrane according to the first aspect of the invention or the device according to the third aspect of the invention

## Brief description of the drawings

**Figure 1.** Representation of a sliding drop (side and top views) with all the parameters involved in the Furmidge equation: droplet mass m, acceleration due to gravity g, tilt angle $\alpha$, drop width w, liquid-air surface tension $\gamma_{LA}$ and dynamic advancing and receding contact angles, $\theta$a and $\theta$r, respectively [12].

**Figure 2.** Schematic diagram of a water flux system. A. Batch set-up experiments and B. Continuous set-up experiments.

**Figure 3.** View of the contact angle (CA) for commercial supports and when coated by dip-coating in 2 % organomethoxysilane (OS)-containing solution

**Figure 4.** SEM (Scanning Electron Microscopy) of Fluytec®, FLAB® and GVB®; and SEM of Fluytec®-2% OS, FLAB®-2%OS andGVB®.

**Figure 5.** Variation of water flux and support weight (A- Fluytec® and B - FLAB®) during permeation study in batch set-up. In each sequence of filtration, 100 mL of deionized water was employed. In this figure, % wt represents % by weight. (In figure 5A, F represents Fluytec®)

**Figure 6.** Water flux and weight studies in continuous set-up related to figure 2B.

**Figure 7.** XPS (X-Ray photoelectron spectroscopy) of Fluytec® and FLAB®; and XPS of Fluytec®-2% OS and FLAB®-2%OS before and after water flux experiments. (CPS = counts per second).

## Detailed description of the invention

In a first aspect, the present invention relates to a polypropylene (PP) membrane coated with an organomethoxysilane alone or combined with oxide particulates according to claim 1.

In this disclosure and in the claims, terms such as "comprises," "comprising," "containing" and "having" are open-ended terms and can mean "includes," "including," and the like; while terms like "consisting of" or "consists of" refer to the mentioned elements after these terms and others which are not mentioned are excluded.

Unless otherwise explained, all technical and scientific terms used herein have the same meaning as commonly understood by one of ordinary skill in the art to which this disclosure belongs. The singular terms "a", "an", and "the" include plural referents unless context clearly indicates otherwise. Similarly, the word "or" is intended to include "and" unless the context clearly indicate otherwise.

In a preferred embodiment, said oxide particulates are selected from graphene oxide micro- or nano-particles and titanium oxide micro- or nano-particles.

In another preferred embodiment, said PP membrane has a pore size ranging from 0.1 to 100 μm, preferably ranging from 0.1 to 50 μm.

The organomethoxysilane of the present invention has the formula (I):

$$R1\text{-}O\text{-}(R2O)_{x\text{-}y}\text{-}(CH_2)_3\text{-}\underset{\underset{R3_a}{|}}{Si}\text{-}(OCH_3)_{3\text{-}a}$$

wherein, independently, R1 is a C1-8 alkyl group; R2 is a C1-8 alkyl group; R3 is a C1-8 alkyl group;

wherein a is 0, 1 or 2, preferably 0, and
wherein X-Y is 6 - 9, 9 - 12, 21-24, or 25 - 30, preferably X-Y is 21-24.

In a particular preferred embodiment, independently of R2 and R3, R1 is methyl.

In a particular preferred embodiment, independently of R1 and R3, R2 is ethyl.

In a particular preferred embodiment, independently of R1 and R2, R3 is methyl.

In a particular preferred embodiment, independently, R1 = R3 = methyl and R2 = ethyl.

"Alkyl" in the context of the present invention means a branched or lineal alkyl group, preferably a lineal alkyl group, for example, a butyl, propyl, ethyl or methyl group.

In a further preferred embodiment, the organomethoxysilane is 2-[methoxy(polyethyleneoxy)21-24propyl] trimethoxy silane.

In another preferred embodiment, the PP membrane further comprises at least one layer over the organomethoxysilane coating and/or at least one layer under the PP membrane.

It is noted that any of the embodiments disclosed herein for the PP membrane according to the first aspect of the invention can be taken alone or combined with any other embodiment disclosed herein unless the context specifies otherwise.

In a second aspect, the present invention relates to a method for manufacturing the PP membrane according to any of embodiments disclosed according to the first aspect of the invention, comprising the steps of:

a) preparing an organomethoxysilane solution, by dissolving the organomethoxysilane in an ethanol and water mixture, and carrying out a hydrolysis reaction catalysed by acid;
b) dipping a PP membrane in the solution obtained in step a).
c) fixing and drying the PP membrane obtained in step b).

In a preferred embodiment of the second aspect, the organomethoxysilane solution in step a) is combined with oxide particulates. Preferably, said oxide particulates are selected from graphene oxide micro- or nano-particles and titanium oxide micro- or nano-particles.

In another preferred embodiment of the second aspect, said PP membrane has a pore size ranging from 0.1 to 100 μm, preferably ranging from 0.1 to 50 μm.

The organomethoxysilane has the formula (I):

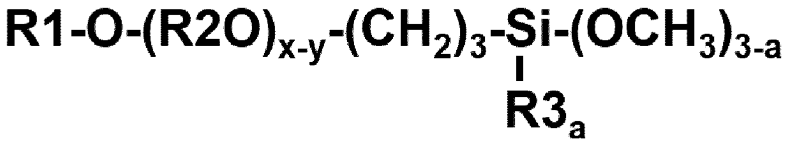

wherein, independently, R1 is a C1-8 alkyl group; R2 is a C1-8 alkyl group; R3 is a C1-8 alkyl group;

wherein a is 0, 1 or 2, preferably 0, and
wherein X-Y is 6 - 9, 9 - 12, 21-24, or 25 - 30, preferably X-Y is 21-24.

In a particular preferred embodiment, independently of R2 and R3, R1 is methyl.

In a particular preferred embodiment, independently of R1 and R3, R2 is ethyl.

In a particular preferred embodiment, independently of R1 and R2, R3 is methyl.

In a particular preferred embodiment, independently, R1 = R3 = methyl and R2 = ethyl.

In a further preferred embodiment of the second aspect, the organomethoxysilane is 2-[methoxy(polyethyleneoxy)21-24propyl]trimethoxy silane.

In another preferred embodiment of the second aspect, the PP membrane further comprises at least one layer over the organomethoxysilane coating and/or at least one layer under the PP membrane.

In another preferred embodiment of the second aspect, in the mixture of alcohol and water of step a), the alcohol is preferably ethanol or isopropanol, more preferably ethanol. Preferably, the ratio between alcohol and water is from 95:5 to 5:95 (v/v), wherein the alcohol is preferably ethanol or isopropanol, more preferably ethanol.

In another preferred embodiment of the second aspect, the hydrolysis reaction is catalysed particularly by a Brønsted acid such as, for example, hydrochloric acid, sulfuric acid, sulfurous acid, phosphoric acid, phosphorous acid, nitric acid, nitrous acid, perchloric acid, chlorous acid, as well as any organic Brønsted acid, such as formic acid, acetic acid, butyric acid, glutaric acid as well as mixtures of the above mentioned Brønsted acids. Glacial acetic acid is preferably used.

In another embodiment of the method according to the second aspect, the method further comprises the step d) of spray coating the PP membrane with oxide particulates when the organomethoxysilane does not contain oxide particulate in the solution of step a). Preferably, said oxide particulates are selected from graphene oxide micro- or nano-particles and titanium oxide micro- or nano-particles.

In another preferred embodiment of the method according to the second aspect, the fixing process in said step c) is carried out by heating the PP membrane at a temperature between 50 and 70 °C, or by applying UV light over the PP membrane, or a combination thereof.

In another preferred embodiment of the method according to the second aspect, said method further comprises a final step of removing the excess of organomethoxysilane. Preferably, said step of removing the excess of organomethoxysilane is carried out by washing with deionized water, acetone or ethanol or under ultrasound, or a combination thereof.

In another preferred embodiment of the method according to the second aspect, the concentration of organomethoxysilane in the final solution of step a) is from 0.01 to 10 % by weight.

In another preferred embodiment of the method according to the second aspect, the ratio of ethanol:water in step a) is 95:5 (v:v).

In another preferred embodiment of the method according to the second aspect, the step a) is carried out for 5 to 60 minutes.

In another preferred embodiment of the method according to the second aspect, the step b) is carried out for 5 to 120 minutes.

In another preferred embodiment of the method according to the second aspect, the step c) is carried out for 30 to 120 minutes.

It is noted that any of the embodiments disclosed herein for the manufacture of the PP membrane according to the second aspect of the invention can be taken alone or combined with any other embodiment disclosed herein unless the context specifies otherwise.

In a third aspect, the present invention relates to a device comprising the PP membrane as defined in any of the embodiments according to the first aspect of the invention.

In a fourth aspect, the present invention relates to the use of the device according to third aspect of the invention for a filtration, osmosis, concentration or dialysis process, or a combination thereof.

Preferably, the filtration process is applied to the filtration of a fluid. More preferably, said fluid is selected from blood and water. Most preferably, said fluid is water.

In the context of the present invention, by "water" is understood water from seawater, municipal wastewater,

brackish water and industrial process water such as cooling, heating and boiler water treatment.

In another preferred embodiment, the osmosis process is reverse osmosis.

In another preferred embodiment, the concentration process is applied to particles or microorganisms.

In another preferred embodiment, the filtration process is applied to MBR (membrane bioreactor).

A number of examples will be provided below that are intended to illustrate the invention and in no way limit the scope of the invention, which is established by the attached claims.

## EXAMPLES

### *Materials and methods*

*Materials*

2-[Methoxy(polyethyleneoxy)21-24propyl]trimethoxysilane (Tech 90) of the organomethoxysilane chemical family (OS). Ethanol absolute was purchased from Scharlau and acetic acid was provided by Sigma-Aldrich. A PP membrane filter from laboratory (pore size = 0.22 μm, diameter 47 mm) was supplied by Filter-Lab® (FLAB®), a PP membrane filter from laboratory (pore size = 0.22 μm, diameter 47 mm) was supplied by Scharlab® (GVB®) and a commercial PP membrane filter like Fluytec® membrane (pore size = 40 μm) was provided by Fluytec Filtration Technologies®.

*Preparation* of a *modified PP membrane*

Firstly, an OS-containing solution was prepared. The OS was dissolved at 2 wt % in 95:5 ethanol:water with 0.02 % glacial acetic acid as a catalyst. After 60 min hydrolysis time, the solution was ready. The PP membrane was immersed (dip-coating) in the OS-containing solution for 30-60 min. After this time, the modified membrane was treated at 60 °C for 60 min in a convection oven.

### *Test 1. Contact Angle measurement*

Dynamic contact angle measurements on the membrane was evaluated using a Drop Shape Analyzer-DSA100 (Krüs GmbH) in order to measure the surface wetting characteristics. The results from these measurements are representatives of the hydrophilicity of each membrane.

The static and the sliding Contact Angle (CA) measurements were carried out with drops of 7 μl volume. An image was taken of each drop and subsequently the contact angles were evaluated. Software ImageJ was used for calculating the angles. Static CA was first measured and then sliding CA. In all experiments, tilting was up to 90° to study advancing CA (θa) and receding CA (θr). Furmidge (see figure 1) assumed the footprint of the drop to be rectangular during sliding, which may be a source of error, but he found the equation to be sufficiently accurate to be able to account for sliding drops on a flat surface [5]. The difference between θa and θr is known as hysteresis.

### *Test 2. Water flux experiment*

Water flux experiments were conducted using a batch set-up system and continuous set-up system. Both schematic diagrams of the test can be found in figure 2A and B, respectively.

The water flux refers to the volume of deionized water passing through a unit membrane area per unit time and is defined as:

$$Flux = \frac{V_{\mathrm{filtrated}}\,(L)}{S_{\mathrm{membrane}}\,(\mathrm{m}^2)\cdot T_{\mathrm{filtration}}\,(\mathrm{h})} \qquad \text{[Eq. 1]}$$

where Flux is the permeate flux (LMH), $V_{filtrated}$ is the volume of deionized water employed in the experiment, $S_{membrane}$ is the effective membrane area (15.2 $cm^2$) and $T_{filtration}$ is the running time (h).

### *Test 3. Weight study*

The dry commercial membranes and dry modified membrane were weighted using a five-digit balance.

**Test 4. X-ray photoelectron spectroscopy**

The surface chemical compositions of the membranes were analysed by X-ray photoelectron spectroscopy (XPS, Axis Supra, Kratos) with Al and K$\alpha$ line as an X-ray source. Commercial supports, supports modified with OS, were analysed before and after water flux experiments.

**Test 5. Study of membrane morphology**

The surface of the commercial membranes and the modified membranes were analyzed by scanning electron microscopy (FEG-SEM, Inspect F, FEI Systems) to evaluate the change in the structure of the membranes. The samples were covered with a copper foil for observation with SEM, using the Sputter Coater Orion 8 HV. To evaluate the change in pore size, on the Fluytec® membrane the pore size was studied by filtering a solution containing particles between 70-40 $\mu$m. The pore size of the OS-modified GVB membrane was evaluated with a solution of Escherichia Coli.

**Test 6. Suitability of membrane materials other than polypropylene**

In order to show the suitability of the membrane material for the purpose of the present invention, materials other than polypropylene were tested for permeability:

- PVDF (polyvinylidene);
- PSf (polysulfone)
- PA (polyamide)
- PES (polyethersulfone)

It was observed that PVDF had less permeability after being coated with organomethoxysilane in the same as conditions as in the present invention.

PSf, PES and PA are indeed very hydrophobic materials and did not show permeability being coated or not coated with organomethoxysilane.

***Results***

The first experiment studied the water flux went through the commercial supports. The readings of the permeability of Fluytec® (F) and Filter-LAB® (FLAB) were 22 and 3535 L/m$^2$h, respectively. Supports were then modified with OS and water flux was evaluated in batch set-up. The results correspond to at least of three replicates. Table 1 and Table 2 show these results for Fluytec® and FLAB®, respectively. As shown, water flux increased with the amount of OS over surface.

**Table 1.** Fluytec® membrane water flux study when 100 mL deionized water was filtered. (Time: time recording; Flux: water flux through the membrane calculated by eq. 1; and, FI: flux water improvement with respect to the Fluytec® commercial membrane).

| Sample | Time (s) | Flux (LMH) | FI (%) |
|---|---|---|---|
| Fluytec® | 10826 | 22* | |
| Fluytec ®- 60°C | 1660 | 142.68 | 424 |
| Fluytec® - 0.01 wt % OS | 40 | 5921 | 21650 |
| | 85 | 2786 | 10135 |
| | 83 | 2854 | 10382 |
| Fluytec®- 2 wt % OS | 8 | 29605 | 108650 |
| | 8 | 29605 | 108650 |
| | 8 | 29605 | 108650 |
| | 8 | 29605 | 108650 |

*The first filtration was 3 hours, but the subsequent filtration stage was stopped when the filtration time achieved 4 hours, and thus not all 100 mL were filtered. In the study, 22 LMH was considered as the water flux for Fluytec® commercial membrane.

**Table 2.** FLAB® water flux study when 100 mL deionized water was filtered. (Time: time recording; Flux: water flux through the membrane calculated by eq. 1; and, FI: flux water improvement with respect to the commercial membrane).

| Sample | Time (s) | Flux (LMH) | FI (%) |
|---|---|---|---|
| FLAB® | 67 | 3535 | |
| | 61 | 3883 | |
| | 60 | 3947 | |
| FLAB®- 60°C | 64 | 3701 | -5 |
| | 58 | 4083 | 5 |
| | 56 | 4229 | 9 |
| FLAB®- 0.02 wt % OS | 56 | 4229 | 9 |
| | 48 | 4934 | 27 |
| | 49 | 4834 | 24 |
| FLAB®- 2 wt % OS | 25 | 9474 | 144 |
| | 29 | 8167 | 110 |
| | 31 | 7640 | 97 |
| | 36 | 6579 | 69 |
| | 35 | 6767 | 74 |
| | 35 | 6767 | 74 |

The surface-wetting properties of the commercial supports before and after treatment were studied by water CA measurements. Commercial Fluytec® and FLAB® membranes have a contact angle (CA) of 104° and 130°, respectively. On the other hand, Fluytec® and FLAB® modified with 2 % OS have a CA of 100° and 112°, respectively.

The results show that OS decreases about 14 % the CA for FLAB®, but the change is negligible for Fluytec® (see figure 3)

Table 3 shows the variation of average water CA measurements for Fluytec® and Fluytec®-2 % OS. Firstly, static CA was studied and then θa and θr for tilt angle of 90° were measured. The values correspond to different times of permeation: before filtration, after filtration and 48 hours after filtration, when the supports were dry. In case of commercial Fluytec®, the increase of CA just after filtration and 48 h later is 24 % and 23 %, respectively. On the other hand, the most significant result is observed for Fluytec®-2 % OS. The modified membrane abruptly increases water flux and according to the permeability study, Fluytec®-2 % OS absorbs the water drop in 40 seconds.

**Table 3.** Static CA and advancing and receding CA for the value of sliding angle of 90° for Fluytec®

| Properties | Fluytec® | | | Fluytec® - 2 %OS | | |
|---|---|---|---|---|---|---|
| | Before filtration | After filtration | 48 h later | Before filtration | After filtration | 48 h later |
| Static CA (°) | 104 | 133 | 128 | 100 | 87 | * |
| Advancing CA (°) | 137 | 147 | 132 | 135 | *Soak up | |
| Receding CA (°) | 116 | 123 | 97 | 107 | | |
| FLUX (MLH) | 22 | | | 13545 | | |

The same study was carried out for FLAB®. These results are shown in

Table 4. Compared to Fluytec®, FLAB® is more hydrophobic. When the surface of contact angle equipment, where FLAB® is located, increases from 0 until 90 °, the drop deposited over surface FLAB® falls down. This fact proves the low attraction between the water and FLAB® surface. After filtration, once FLAB® is wet, this situation is not observed anymore. In this case, the drop remains attached over surface for 90° tilt. θa and θr are 125° and 130°, respectively. In addition, 48 hours after filtration permeability experiments, FLAB® recovers the initial properties, since static CA is similar to values obtained with commercial filter and the water drop slides when tilt reaches 90°. In contrast, FLAB® - 2 % OS is slightly more hydrophilic than FLAB®, as static CA is lower than that for commercial FLAB in all experiments (before, after and 48 hours after filtration). In addition, when tilt achieves 90°, the water drop remains attached to surface (it does not slide), indicating that the OS changes the hydrophilic properties. Finally, the last row in 4 summarizes the water flux for commercial FLAB® and FLAB® - 2 % OS. FLAB® - 2 % OS shows an increase of 106 % with respect to the initial untreated (not covered with OS) commercial filter.

**Table 4.** Static contact angle and advancing and receding contact angle for the value of sliding angle of 90° for FLAB®.

| Properties | FLAB® (PP) Before fil. | FLAB® (PP) After fil. | FLAB® (PP) 48 h later | FLAB® (PP)- 2 %OS Before fil. | FLAB® (PP)- 2 %OS After fil. | FLAB® (PP)- 2 %OS 48 h later |
|---|---|---|---|---|---|---|
| Static CA (°) | 130 ± 2 | 124 ± 4 | 132 ± 2 | 112 ± 2 | 110 ± 3 | 120 ± 2 |
| Advancing CA (°)<br>Receding CA (°) | Fall | 130 ± 3<br>125 ± 1 | Fall | 123 ± 2<br>114 ± 2 | 90 ± 1<br>90 ± 1 | 135 ± 2<br>120 ± 3 |
| FLUX (MLH) | | 3792 | | | 7818 | |

In addition, the same study is performed for GVB®. These results are shown in Table 5. Compared to Fluytec® and FLAB® this filter is more hydrophobic. When the surface of the contact angle equipment, where GVB® is located, increases from 0 to 90°, the drop deposited on the GVB® surface falls. This fact demonstrates the low attraction between water and the GVB® surface. After filtration, once GVB® is wet, this situation is no longer observed. In this case, the drop remains attached on the surface for a tilt of 90°. θa and θr are 121° and 117°, respectively. In addition, 48 hours after the filtration permeability experiments, GVB® recovers the initial properties, since the static CA is similar to the values obtained with the commercial filter and the water drop slides when the inclination reaches 90°. In contrast, GVB® - 2% OS, is initially slightly more hydrophobic than FLAB®, since the static CA is higher than that for FLAB®. Furthermore, when the tilt reaches 90°, the water drop remains attached to the surface (it does not slide), which indicates that the OS changes the hydrophilic properties. Finally, the last row of Table 5 summarizes the water flow for GVB® commercial and GVB® - 2% OS. GVB® - 2% OS shows an increase of 64.4% over the initial untreated commercial filter (not covered with OS).

**Table 5.** Static contact angle and advancing and receding contact angle for the value of sliding angle of 90° for GVB®.

| Properties | GVB® (PP) Before filtration | GVB® (PP) After filtration | GVB® (PP) 48 h later | GVB® (PP)- 2 %OS Before filtration | GVB® (PP)- 2 %OS After filtration | GVB® (PP)- 2 %OS 48 h later |
|---|---|---|---|---|---|---|
| Static CA (°) | 142 ± 3 | 116 ± 4 | 138 ± 3 | 122 ± 3 | 102 ± 1 | 111 ± 4 |
| Advancing CA (°)<br>Receding CA (°) | Fall | 121 ± 3<br>117 ± 3 | Fall | 120 ± 3<br>90 ± 3 | 135 ± 2<br>90 ± 2 | 128 ± 2<br>108 ± 4 |
| FLUX (MLH) | | 1091 | | | 1794 | |

Weight studies were then carried out in order to make sure that OS still remains on the support after filtration experiments. These experiments are summarized in Table 6. The results show that a weight increase of 13.5 %, 7.7 % and 13.9 % was observed in Fluytec®, FLab® and GVB® membranes, respectively, after applying 2 % OS.

**Table 6**. Initial membrane weights and water permeation abilities.

| | Fluytec® (PP, 40μm) Commercial | Fluytec® (PP, 40μm) Fluytec®-2% OS | FLAB® (PP, 0.22μm) Commercial | FLAB® (PP, 0.22μm) FLAB®-2% OS | GVB® (PP, 0.22μm) Commercial | GVB® (PP, 0.22μm) GVB®-2% OS |
|---|---|---|---|---|---|---|
| **Weight(mg)** | 172.65 | 195.95 | 142.30 | 144.89 | 41.6 | 47.4 |
| **Water Flux (LMH)** | 22* | 23684 | 3883 | 8742 | 1091 | 1794 |
| **FI (%)** | > 107554 | | 125 | | 64.4 | |

*The first filtration was 3 hours, but the subsequent filtration stage was stopped when the filtration time achieved 4 hours, and thus not all 100 mL were filtered.

In the study, 22 LMH was considered the water flux for Fluytec® commercial membrane

In order to assess the long term effect of OS over the membrane and consequently the performance stability and durability, we performed experiments with the batch set-up. Figure 5 A shows the flux resulting from flowing 100 mL of deionized water through the OS modified Fluytec® PP membrane at different steps until the flux reached a saturation value. The experiment was performed in four steps or stages. After each of them, the membrane was dried for 24 hours at room temperature, before undergoing the subsequent stage. In the figure, the water flux of commercial Fluytec® is not shown as the value is too low for the scale of Y-Axis (<22 LMH - see Table 6). In addition, Figure 5 A shows the weight corresponding to the "dry" state of the mebrane after each permeation sequence. We can observe that the water flux and

the membrane weight decrease with the number of sequences. This fact probably indicates that during the permeation study the OS in excess on the membrane surface is removed and the membrane surface loses part of the hydrophilicity acquired just after the coating. In addition, at the end of the 4 sequences, the Fluytec®-2% OS showed a stable value of permeability and much higher water flux than that of the commercial Fluytec®. At the same time, it only showed a slightly increased weight, indicating that the OS in excess was likely to be removed until forming a monolayer or a few layers after the applied permeability sequences (see Table 6).

Figure 5B and Table 6 collect the results for FilterLAB® modified with 2 % OS. At the beginning of experiments, FilterLAB-2% OS shows a weight increase of 7.7% with respect to commercial FilterLAB®. The first filtration with 100 mL has the highest water flux. Third and fourth runs show stable values in terms of water flux and membrane weight. This indicates that all OS in excess was likely removed, remaining a self-assembly monolayer of OS over the surface. In addition, if these results are compared with the results of flux and weight summarized in Table 5, it can be concluded that OS modified the membrane surface and improved the water flux about 45 % with respect to commercial FLAB membrane.

To further investigate the stability of the OS coated PP membranes, measurements in a continuous set-up were carried out. Table 6 summarizes the initial water flux (measured with batch set-up) for initial commercial membranes and OS modified membranes.

Figure 5 shows water flux for Fluytec® and FLAB® membranes modified with 2 % OS when the experiments were carried out with continuous set-up. The first sequence consisted of measuring the water flux for 24 hours. After this, the membranes were soaked in deionized water for 24 hours. Finally, the membranes were measured again for 72 hours of continuous operation. In these experiments, we can consider that the water flux is kept constant.

Figure 6A does not show the value of water flux for commercial Fluytec® since, with continuous set-up, the water does not flow through the membrane due to its hydrophobicity.

Figure 5B shows the same experiment for FilterLAB® and FLAB® 2 % OS. The FilterLAB®-2% OS showed a much higher permeability (43%) than that of the commercial FilterLAB®.

Finally, when comparing the performance between continuous and batch set-ups depicted in Figures 5 and 6, we observed that continuous set-up shows an improvement in water flux because the membrane is keeping always wet.

**Table 7.** Initial weight of supports and water permeation capacities studied in batch set-up.

| | **Fluytec® (PP, 40μm)** | | **FLAB® (PP, 0.22μm)** | |
|---|---|---|---|---|
| | **Commercial** | **Fluytec®-2 % OS** | **Commercial** | **FLAB®-2%OS** |
| **Weight(mg)** | 152.62 | 177.11 | 128.51 | 135.87 |
| **Water Flux (LMH)** | 22* | 18787 | 3883 | 8459 |
| **FI (%)** | > 85295 | | 118 | |

Figure 6 shows the XPS for Fluytec® and FLAB® (A); and, Fluytec® 2% OS and FLAB®- 2 % OS before (B) and after (C) being employed in water flux experiments. The major peak at binding energy (B.E.) of 281 eV is attributed to C-C bond and peak at B.E. of 530 eV corresponds to oxygen. Graphics corresponding to Fluytec® shows three spectres: up, denotes the first sheet; int, denote intermedia sheet; and, down, denote the third sheet, since this membrane has three sheets. In case of FLAB®, graphics show only two spectres: up, denote the top surface; and, down, denote the bottom surface, since FLAB® consists of only one sheet. As shown in Figure 7 A, commercial supports do not show the O peak in the XPS. This fact is due to the fact that PP has only C and H in its structure. Figure 7 B shows XPS for support modified with OS (Fluytec®-2% OS and FLAB® (R)-2 %OS). In these experiments, O peak is shown indicating that the OS has been deposited over surface. Finally, Figure 7 C shows XPS for Fuytec®-2% OS and FLAB®-2 %OS before being employed in water flux experiments. This analysis shows that after water filtration was carried out, the OS remained over the membrane surface.

In the study of pore size modification, a 50 g/L solution of polystyrene particles of equal spherical size and greater than 40 μm is prepared. The initial particle solution had a value of 34 ± 2 NTU (Nephelotimetric Turbidity Unit). After filtering this solution using the Fluytec - 2% OS membrane, the NTU reading was zero. In this sense, the modified Fluytec retains particles larger than 40 μm.

The GVB-2% OS membrane was evaluated in the elimination of E. coli. E. Colis were determined using the Colibert-18 test (ISO 9308-2: 2012). The results are expressed as the most probable number of coliforms (MPN) per 100 ml, being the limit of quantification 1 MPN/100 ml. The starting point is a solution of 14.6 MPN/100 mL of E. Coli. In the experiment, 1 L is filtered. In the final analysis, 0 MPN/100 mL was obtained. This fact indicates that the membrane retained the E. Coli from the medium.

Finally, Table 8 shows the water permeation capacities as measured employing other materials: PVDF, PSf, PA and PES. The table summarizes the permeability evaluated in batch set-up with unmodified support and supports modified with OS. Last column corresponds to flux water improvement with respect to the commercial membrane. In these

experiments, the permeation capacities were not improved in any case.

**Table 8.** Water flux study for PVDF, PSf, PA and PES membranes when 100 mL deionized water was filtered in batch set-up. (Time: time recording; Flux: water flux through the membrane calculated by eq. 1; and, FI: flux water improvement with respect to the commercial membrane).

| Sample | Time (s) | Flux (LMH) | FI (%) |
|---|---|---|---|
| PVDF | 255 | 929 | |
| PVDF - 2 wt % OS | 570 | 416 | -55 |
| PSf | 0 | 0 | |
| PSf - 2 wt % OS | 0 | 0 | 0 |
| PA | 0 | 0 | |
| PA - 2 wt % OS | 0 | 0 | 0 |
| PES | 0 | 0 | |
| PES - 2 wt % OS | 0 | 0 | 0 |

## Conclusions

The above results confirm that the surface wettability of a polypropylene membrane (like Fluytec®, FLAB® or GVB®) is surprisingly improved by organomethoxysilanes. In addition, by employing the chemical modification with OS over the membrane, no changes in the structure are observed (Figure 4), while the PP membrane as produced has improved hydrophilicity properties.

## References

1.- AL-Hobaib, A. S., J. El Ghoul, and L. El Mir. 2016. "Fabrication of Polyamide Membrane Reached by MgTiO3-nanoparticles for Ground Water Purification." Desalination and Water Treatment 57(19): 8639-48.

2.- CN 106310958 B

3.- Dong, Lei Xi et al. 2016. "A Thin-Film Nanocomposite Nanofiltration Membrane Prepared on a Support with in Situ Embedded Zeolite Nanoparticles." Separation and Purification Technology 166: 230-39.

4.- Fang, Baohong et al. 2009. "Modification of Polyethersulfone Membrane by Grafting Bovine Serum Albumin on the Surface of Polyethersulfone/Poly(Acrylonitrile-Co-Acrylic Acid) Blended Membrane." Journal of Membrane Science 329(1-2): 46-55.

5.- Furmidge, C. G.L. 1962. "Studies at Phase Interfaces. I. The Sliding of Liquid Drops on Solid Surfaces and a Theory for Spray Retention." Journal of Colloid Science 17(4): 309-24.

6.- US 7,264,728 B2

7.- Kim, Hyun Il, and Sung Soo Kim. 2006. "Plasma Treatment of Polypropylene and Polysulfone Supports for Thin Film Composite Reverse Osmosis Membrane." Journal of Membrane Science 286(1-2): 193-201.

8.- Li, Qiang et al. 2015. "Influence of Silica Nanospheres on the Separation Performance of Thin Film Composite Poly(Piperazine-Amide) Nanofiltration Membranes." Applied Surface Science 324: 757-64.

9.- Lv, Yan et al. 2016. "Novel Nanofiltration Membrane with Ultrathin Zirconia Film as Selective Layer." Journal of Membrane Science 500: 265-71.

10.- Murphy, Fionn, Ciaran Ewins, Frederic Carbonnier, and Brian Quinn. 2016. "Wastewater Treatment Works (WwTW) as a Source of Microplastics in the Aquatic Environment." Environmental Science and Technology 50(11): 5800-5808.

11.- Pan, Yang et al. 2017. "A Novel Antifouling and Antibacterial Surface-Functionalized PVDF Ultrafiltration Membrane via Binding Ag/SiO2 Nanocomposites." Journal of Chemical Technology and Biotechnology 92(3): 562-72.

12.- Spori, Doris Madeleine. 2010. "Structural Influences on Self-Cleaning Surfaces." : 1-201.

13.- Sumisha, Anappara et al. 2015. "Functionalized Titanate Nanotube-Polyetherimide Nanocomposite Membrane for Improved Salt Rejection under Low Pressure Nanofiltration." RSC Advances 5(49): 39464-73. www.rsc.org/advances (February 4, 2020).

14.- Tang, Yong Jian et al. 2017. "Improving the Chlorine-Tolerant Ability of Polypiperazine-Amide Nanofiltration

Membrane by Adding NH2-PEG-NH2 in the Aqueous Phase." Journal of Membrane Science 538: 9-17.
15.- US 10,472,769 B2
16.- Wang, Sheng Yao et al. 2018. "Novel Ultrafiltration Membranes with Excellent Antifouling Properties and Chlorine Resistance Using a Poly(Vinyl Chloride)-Based Copolymer." Journal of Membrane Science 549: 101-10.
17.- Wang, Songhe et al. 2020. "Design and Preparation of Polypropylene Ultrafiltration Membrane with Ultrahigh Flux for Both Water and Oil." Separation and Purification Technology 238 (2020) 116455.
18.- Wenten, I G et al. 2020. "Preparation of Antifouling Polypropylene/ZnO Composite Hollow Fiber Membrane by Dip-Coating Method for Peat Water Treatment." Journal of Water Process Engineering 34 (2020) 101158.
19.- US 9,415,351
20.- CN 107519768 B
21.- WO 1999020378 A1

## Claims

1. A polypropylene (PP) membrane coated with an organomethoxysilane alone or combined with oxide particulates, wherein said organomethoxysilane has the formula (I):

$$\mathbf{R1\text{-}O\text{-}(R2O)_{x\text{-}y}\text{-}(CH_2)_3\text{-}\underset{\underset{\displaystyle R3_a}{|}}{Si}\text{-}(OCH_3)_{3\text{-}a}}$$

   wherein, independently, R1 is a C1-8 alkyl group; R2 is a C1-8 alkyl group; R3 is a C1-8 alkyl group, wherein a is 0, 1 or 2, and
   wherein X-Y is 6 - 9, 9 - 12, 21-24, or 25 - 30.

2. The PP membrane of claim 1, wherein said oxide particulates are selected from graphene oxide micro- or nano-particles and titanium oxide micro- or nano-particles.

3. The PP membrane of claim 1 or 2, wherein said PP membrane has a pore size ranging from 0.1 to 100 $\mu$m.

4. The PP membrane of any of claims 1 to 3, wherein X-Y is 21-24.

5. The PP membrane of any of claims 1 to 3, wherein the organomethoxysilane is 2-[methoxy(polyethyleneoxy) 21-24propyl]trimethoxysilane.

6. The PP membrane of any of claims 1 to 5, further comprising at least one layer over the organomethoxysilane coating and/or at least one layer under the PP membrane.

7. A method for manufacturing the PP membrane according to any of claims 1 to 6, comprising the steps of:

   a) preparing an organomethoxysilane solution by dissolving the organomethoxysilane in a mixture of ethanol and water carrying out a hydrolysis reaction catalysed by acid;
   b) dipping a PP membrane in the solution obtained in step a).
   c) fixing and drying the PP membrane obtained in step b).

8. The method according to claim 7, wherein the organomethoxysilane solution in step a) is combined with oxide particulates.

9. The method of claim 7, wherein the method further comprises the step d) of spray coating the PP membrane with oxide particulates.

10. The method according to any of claims 7 to 9, wherein the fixing process in said step c) is carried out by heating the PP membrane at a temperature between 50 and 70 °C, or by applying UV light over the PP membrane, or a combination thereof.

**11.** The method according to any of claims 7 to 10, wherein the concentration of organomethoxysilane in the final solution of step a) is from 0.01 to 10 % by weight.

**12.** The method according to any of claims 7 to 11, wherein the ratio of ethanol:water in step a) is 95:5 (v:v).

**13.** The method according to any of claims 7 to 12, wherein the step b) is carried out for 5 to 120 minutes.

**14.** A device comprising the membrane according to any of claims 1 to 6.

**15.** Use of the device according to claim 14 for a filtration, osmosis, concentration or dialysis process, or a combination thereof.

**Patentansprüche**

**1.** Polypropylen-(PP)-Membran, beschichtet mit einem Organomethoxysilan allein oder kombiniert mit Oxidteilchen, wobei das Organomethoxysilan die Formel (I) hat:

$$R1\text{-}O\text{-}(R2O)_{x\text{-}y}\text{-}(CH_2)_3\text{-}\underset{\substack{|\\ R3_a}}{Si}\text{-}(OCH_3)_{3\text{-}a}$$

wobei, unabhängig voneinander, R1 eine C1-8-Alkylgruppe ist; R2 eine C1-8-Alkylgruppe ist; R3 eine C1-8-Alkylgruppe ist,
wobei a 0,1 oder 2 ist, und
wobei X-Y 6 - 9, 9 - 12, 21-24 oder 25 - 30 ist.

**2.** PP-Membran nach Anspruch 1, wobei die Oxidpartikel ausgewählt sind aus Graphenoxid-Mikro- oder Nanopartikeln und Titanoxid-Mikro- oder Nanopartikeln.

**3.** PP-Membran nach Anspruch 1 oder 2, wobei die PP-Membran eine Porengröße im Bereich von 0,1 bis 100 $\mu$m aufweist.

**4.** PP-Membran nach einem der Ansprüche 1 bis 3, wobei X-Y 21-24 ist.

**5.** PP-Membran nach einem der Ansprüche 1 bis 3, wobei das Organomethoxysilan 2-[Methoxy(polyethylenoxy) 21-24propyl]trimethoxysilan ist.

**6.** PP-Membran nach einem der Ansprüche 1 bis 5, ferner umfassend mindestens eine Schicht über der Organomethoxysilan-Beschichtung und/oder mindestens eine Schicht unter der PP-Membran.

**7.** Verfahren zum Herstellen der PP-Membran nach einem der Ansprüche 1 bis 6, umfassend die Schritte:

a) Herstellen einer Organomethoxysilanlösung durch Auflösen des Organomethoxysilans in einem Gemisch aus Ethanol und Wasser, Durchführen einer durch Säure katalysierte Hydrolysereaktion;
b) Eintauchen einer PP-Membran in die in Schritt a) erhaltene Lösung.
c) Fixieren und Trocknen der in Schritt b) erhaltenen PP-Membran.

**8.** Verfahren nach Anspruch 7, wobei die Organomethoxysilanlösung in Schritt a) mit Oxidpartikeln kombiniert wird.

**9.** Verfahren nach Anspruch 7, wobei das Verfahren ferner den Schritt d) von Sprühbeschichten der PP-Membran mit Oxidpartikeln umfasst.

**10.** Verfahren nach einem der Ansprüche 7 bis 9, wobei der Fixiervorgang in Schritt c) durch Erhitzen der PP-Membran auf eine Temperatur zwischen 50 und 70 °C oder durch Aufbringen von UV-Licht auf die PP-Membran oder eine Kombination davon durchgeführt wird.

**11.** Verfahren nach einem der Ansprüche 7 bis 10, wobei die Konzentration von Organomethoxysilan in der finalen Lösung von Schritt a) 0,01 bis 10 Gew.-% ist.

**12.** Verfahren nach einem der Ansprüche 7 bis 11, wobei das Verhältnis von Ethanol zu Wasser in Schritt a) 95:5 (v:v) ist.

**13.** Verfahren nach einem der Ansprüche 7 bis 12, wobei der Schritt b) für 5 bis 120 Minuten durchgeführt wird.

**14.** Vorrichtung umfassend die Membran nach einem der Ansprüche 1 bis 6.

**15.** Verwendung der Vorrichtung nach Anspruch 14 für ein Filtrations-, Osmose-, Konzentrations- oder Dialyseverfahren oder eine Kombination davon.

**Revendications**

**1.** Membrane de polypropylène (PP) revêtue d'un organométhoxysilane seul ou combiné à des particules d'oxyde, dans laquelle ledit organométhoxysilane répond à la formule (I) :

$$R1\text{-}O\text{-}(R2O)_{x\text{-}y}\text{-}(CH_2)_3\text{-}\underset{\displaystyle R3_a}{\underset{|}{Si}}\text{-}(OCH_3)_{3\text{-}a}$$

dans laquelle, indépendamment, R1 est un groupe alkyle en C1-8 ; R2 est un groupe alkyle en C1-8 ; R3 est un groupe alkyle en C1-8,
dans laquelle a est 0, 1 ou 2, et
dans laquelle X-Y est compris entre 6 et 9, entre 9 et 12, entre 21 et 24 ou entre 25 et 30.

**2.** Membrane de PP selon la revendication 1, dans laquelle lesdites particules d'oxyde sont choisies parmi des micro ou nano-particules d'oxyde de graphène et des micro ou nano-particules d'oxyde de titane.

**3.** Membrane de PP selon la revendication 1 ou 2, dans laquelle ladite membrane de PP présente une taille de pore allant de 0,1 à 100 $\mu$m.

**4.** Membrane de PP selon l'une quelconque des revendications 1 à 3, dans laquelle X-Y est 21 à 24.

**5.** Membrane de PP selon l'une quelconque des revendications 1 à 3, dans laquelle l'organométhoxysilane est le 2-[méthoxy(polyéthylèneoxy)21-24propyl]triméthoxysilane.

**6.** Membrane de PP selon l'une quelconque des revendications 1 à 5, comprenant en outre au moins une couche au-dessus du revêtement d'organométhoxysilane et/ou au moins une couche sous la membrane de PP.

**7.** Procédé de fabrication de la membrane de PP selon l'une quelconque des revendications 1 à 6, comprenant les étapes consistant à :

a) préparer une solution d'organométhoxysilane en dissolvant l'organométhoxysilane dans un mélange d'éthanol et d'eau en effectuant une réaction d'hydrolyse catalysée par un acide ;
b) plonger une membrane de PP dans la solution obtenue à l'étape a).
c) fixer et sécher la membrane de PP obtenue à l'étape b).

**8.** Procédé selon la revendication 7, dans lequel la solution d'organométhoxysilane, à l'étape a), est combinée avec des particules d'oxyde.

**9.** Procédé selon la revendication 7, dans lequel le procédé comprend en outre l'étape d) d'application en revêtement par pulvérisation de particules d'oxyde sur la membrane de PP.

**10.** Procédé selon l'une quelconque des revendications 7 à 9, dans lequel le processus de fixation, à ladite étape c), est

réalisé en chauffant la membrane de PP à une température comprise entre 50 et 70°C, ou en appliquant une lumière UV sur la membrane en PP, ou une combinaison de deux.

**11.** Procédé selon l'une quelconque des revendications 7 à 10, dans lequel la concentration d'organométhoxysilane dans la solution finale de l'étape a) est de 0,01 à 10 % en poids.

**12.** Procédé selon l'une quelconque des revendications 7 à 11, dans lequel le rapport éthanol:eau dans l'étape a) est de 95:5 (v:v).

**13.** Procédé selon l'une quelconque des revendications 7 à 12, dans lequel l'étape b) est réalisée pendant 5 à 120 minutes.

**14.** Dispositif comprenant la membrane de PP selon l'une quelconque des revendications 1 à 6.

**15.** Utilisation du dispositif selon la revendication 14 pour un procédé de filtration, d'osmose, de concentration ou de dialyse, ou une combinaison de ceux-ci.

Figure 1

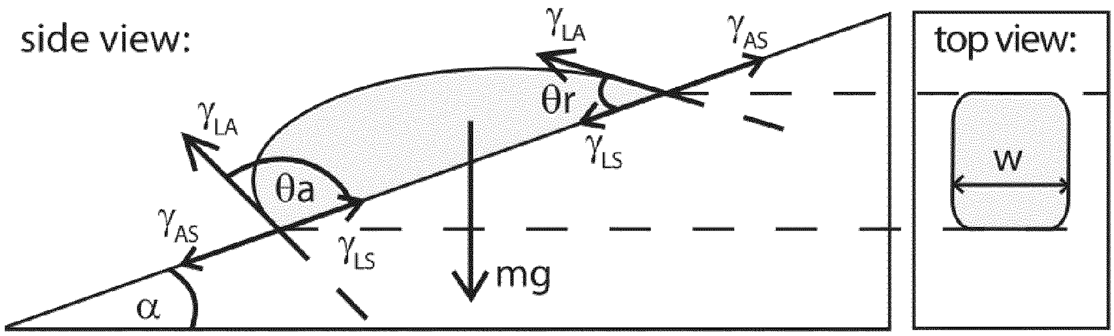

Figure 2

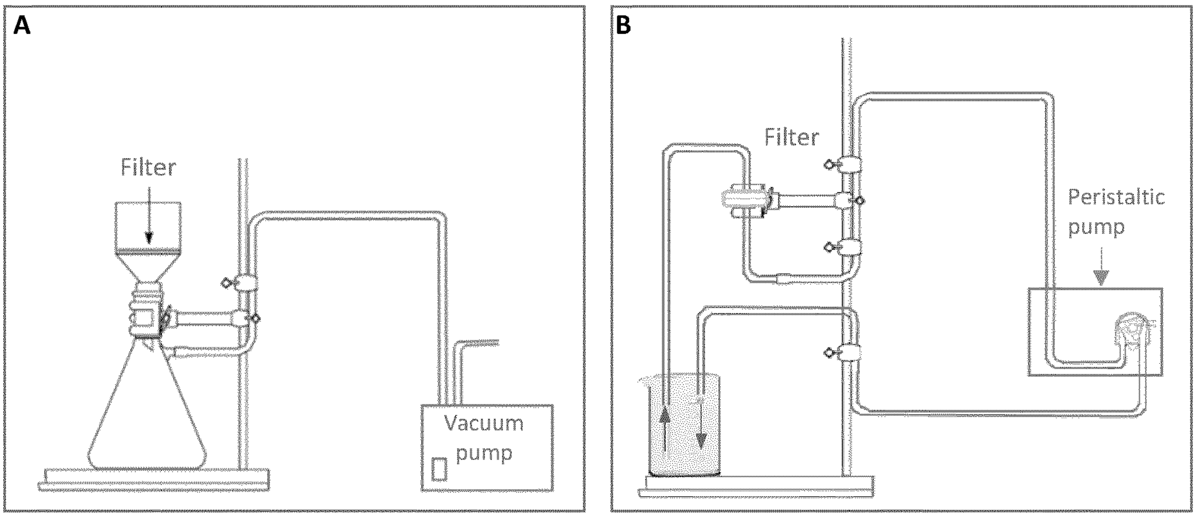

Figure 3

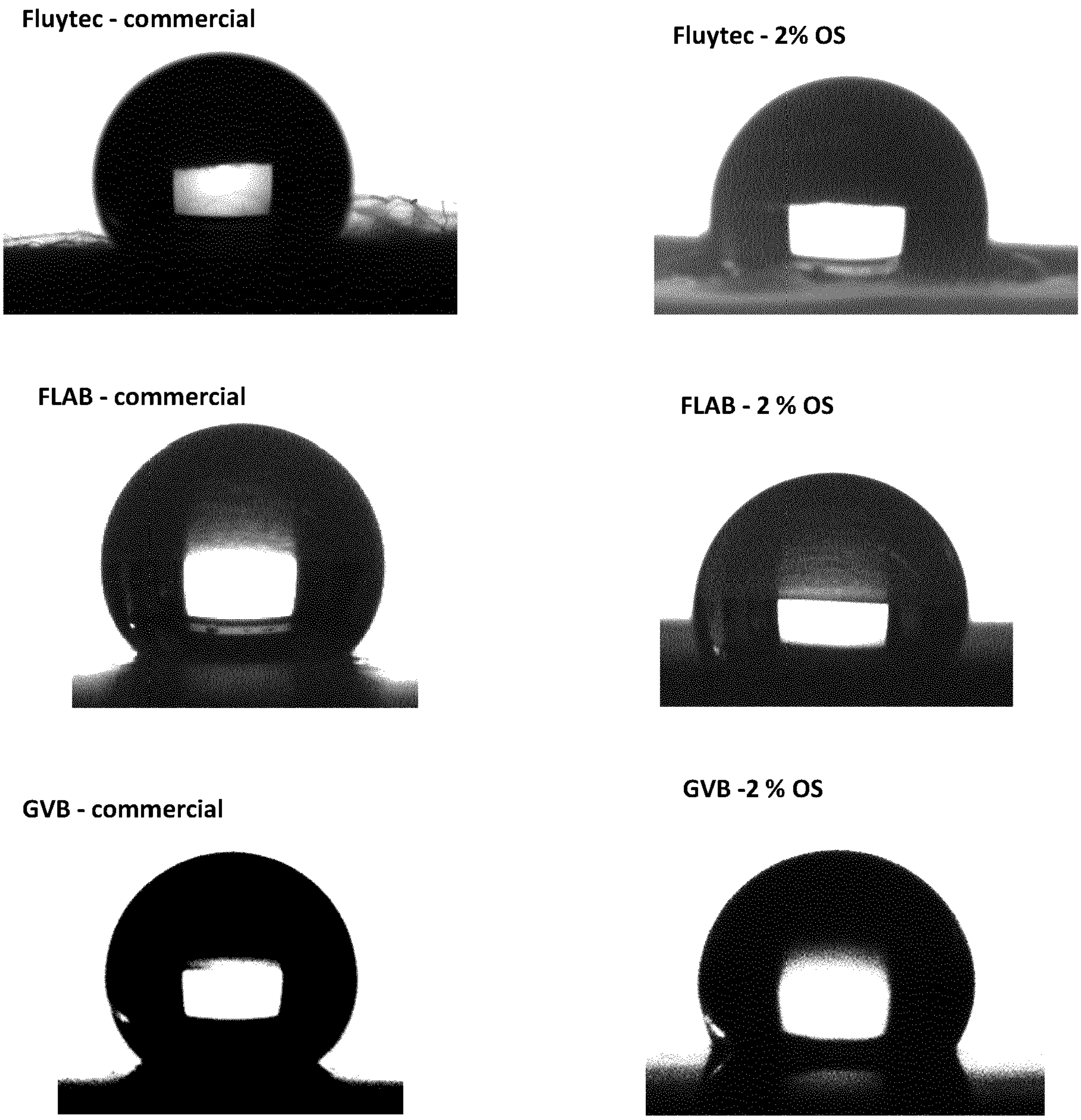
Fluytec - commercial
Fluytec - 2% OS
FLAB - commercial
FLAB - 2 % OS
GVB - commercial
GVB -2 % OS

Figure 4

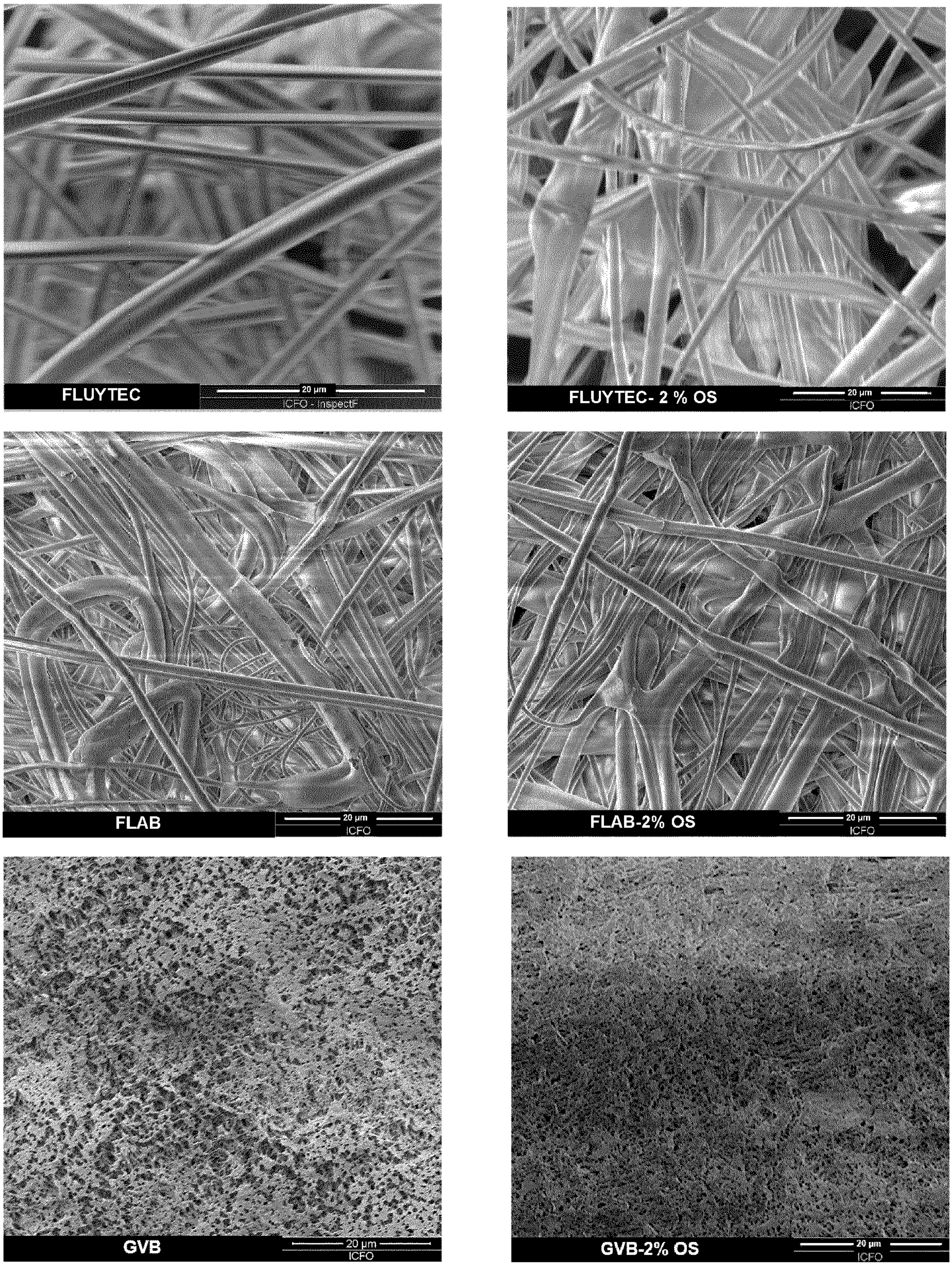
FLUYTEC
20 µm
ICFO - InspectF
FLUYTEC- 2 % OS
20 µm
ICFO
FLAB
20 µm
ICFO
FLAB-2% OS
20 µm
ICFO
GVB
20 µm
ICFO
GVB-2% OS
20 µm
ICFO

Figure 5

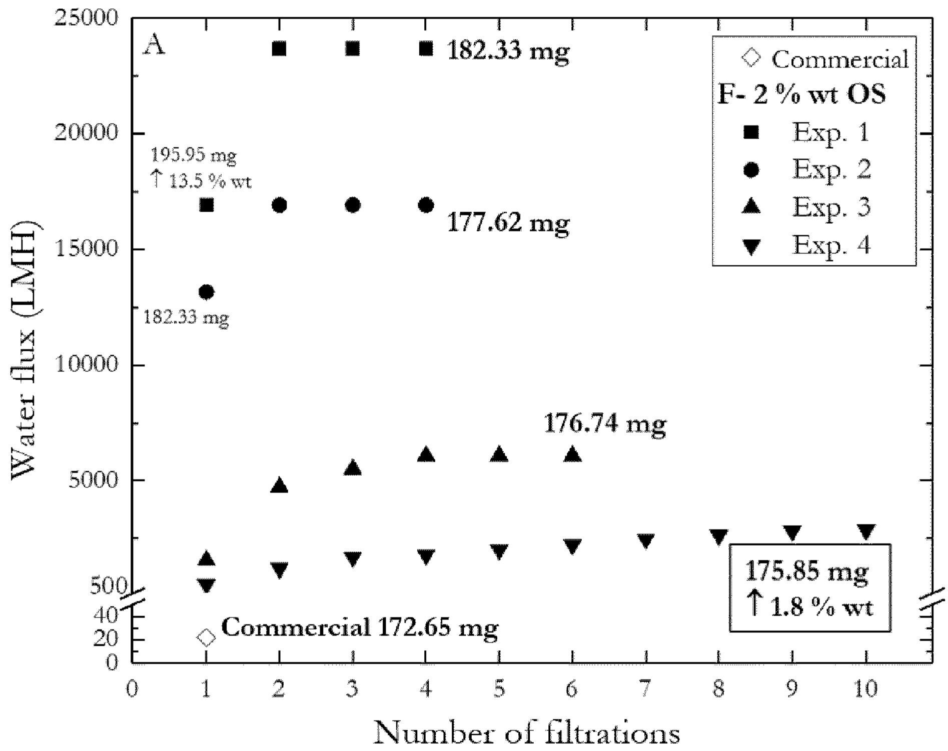
A
Water flux (LMH)
Number of filtrations
Commercial
F- 2 % wt OS
Exp. 1
Exp. 2
Exp. 3
Exp. 4
182.33 mg
195.95 mg
↑ 13.5 % wt
177.62 mg
182.33 mg
176.74 mg
175.85 mg
↑ 1.8 % wt
Commercial 172.65 mg

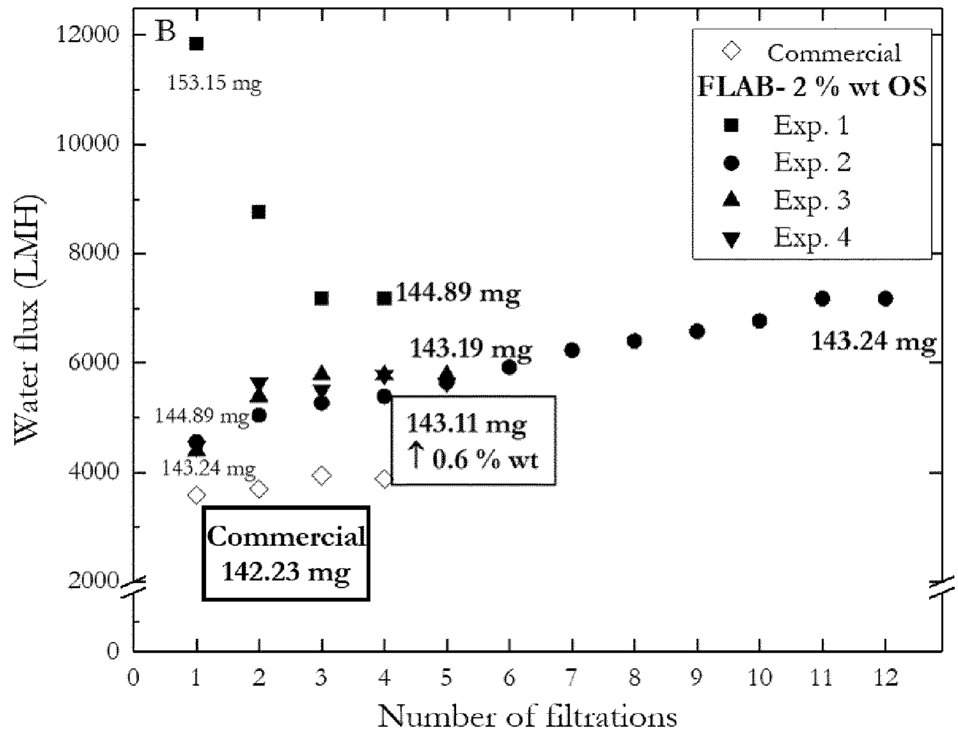
B
Water flux (LMH)
Number of filtrations
Commercial
FLAB- 2 % wt OS
Exp. 1
Exp. 2
Exp. 3
Exp. 4
153.15 mg
144.89 mg
143.19 mg
143.24 mg
144.89 mg
143.24 mg
143.11 mg
↑ 0.6 % wt
Commercial
142.23 mg

Figure 6

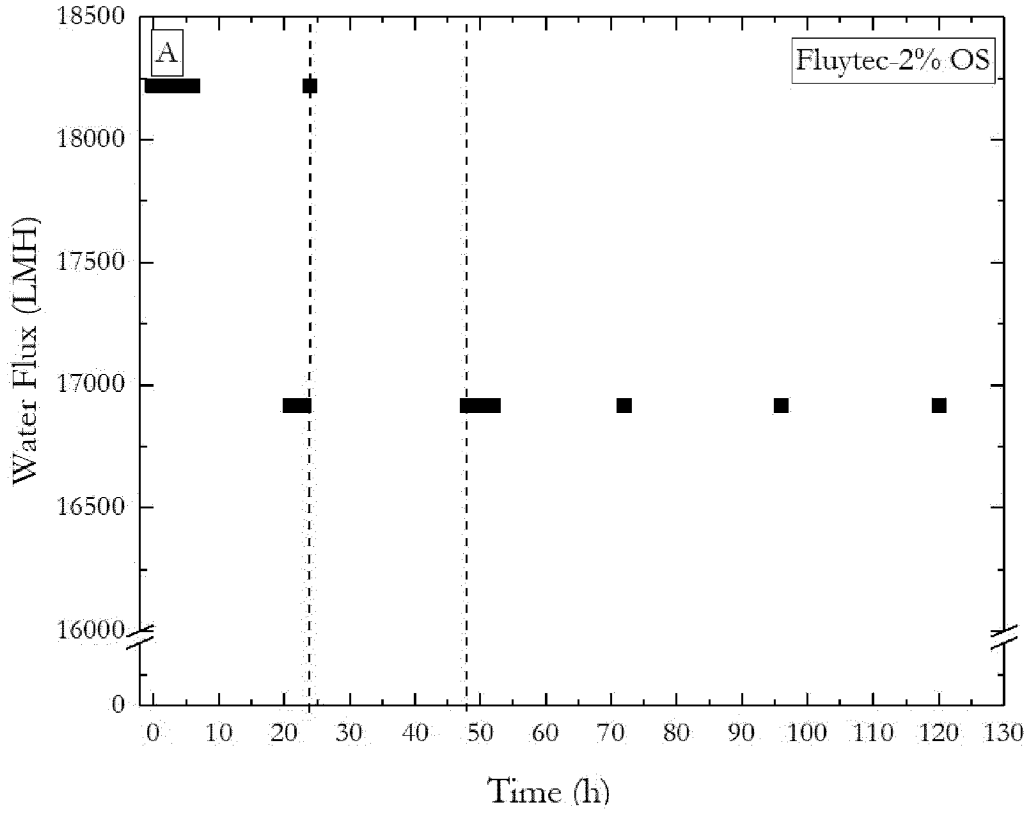
A
Fluytec-2% OS
Water Flux (LMH)
18500
18000
17500
17000
16500
16000
0
0 10 20 30 40 50 60 70 80 90 100 110 120 130
Time (h)

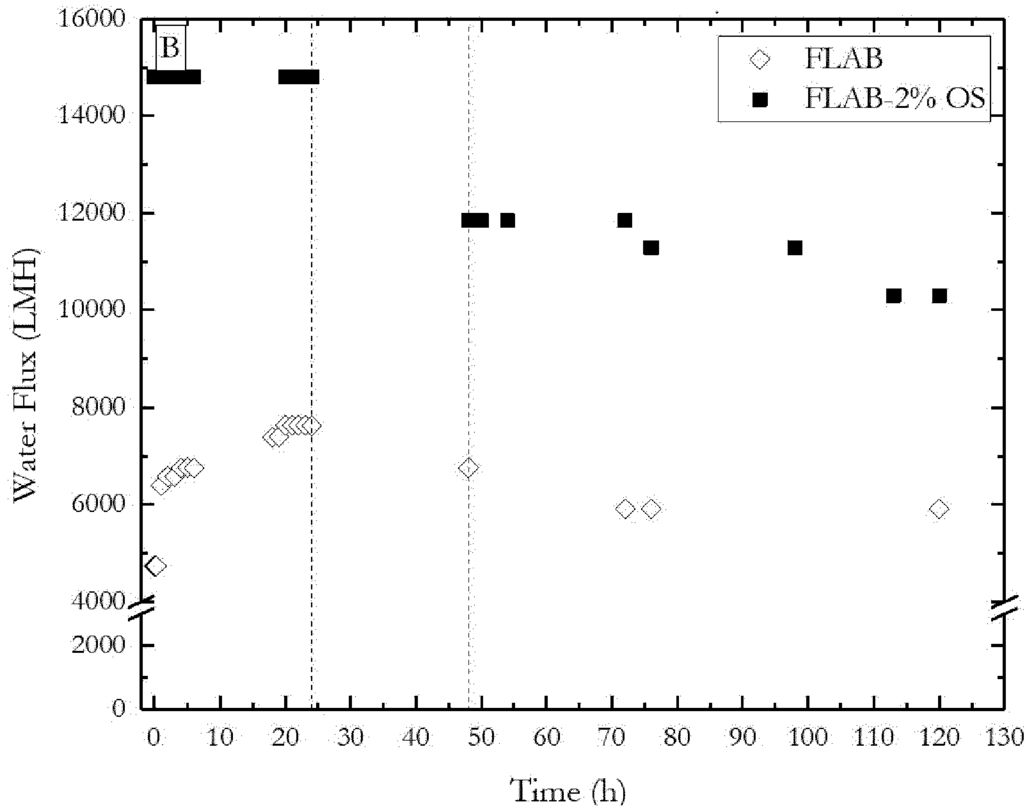
B
FLAB
FLAB-2% OS
Water Flux (LMH)
16000
14000
12000
10000
8000
6000
4000
2000
0
0 10 20 30 40 50 60 70 80 90 100 110 120 130
Time (h)

Figure 7 A

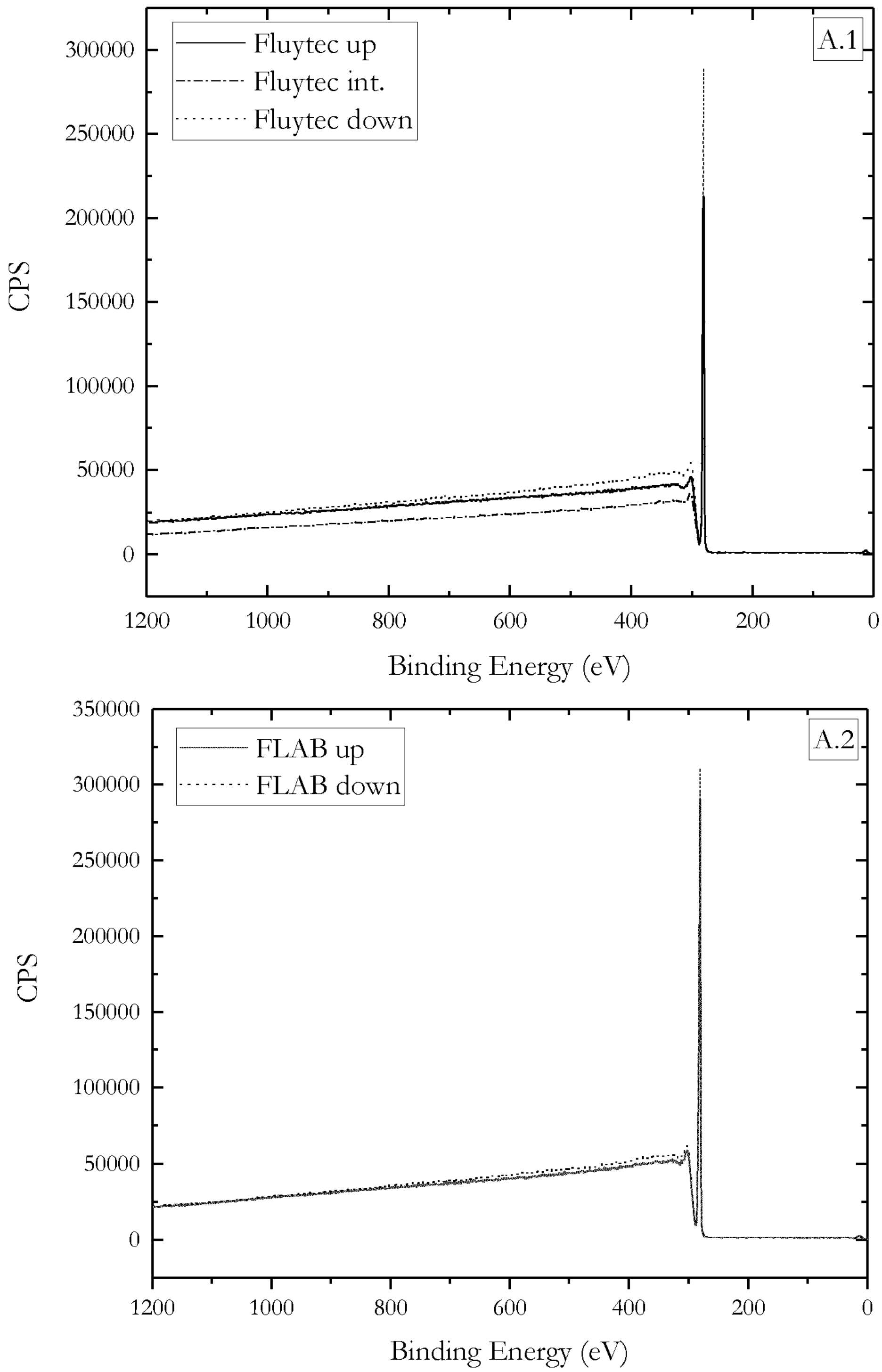
A.1
Fluytec up
Fluytec int.
Fluytec down
CPS
300000
250000
200000
150000
100000
50000
0
1200
1000
800
600
400
200
0
Binding Energy (eV)
A.2
FLAB up
FLAB down
CPS
350000
300000
250000
200000
150000
100000
50000
0
1200
1000
800
600
400
200
0
Binding Energy (eV)

Figure 7 B

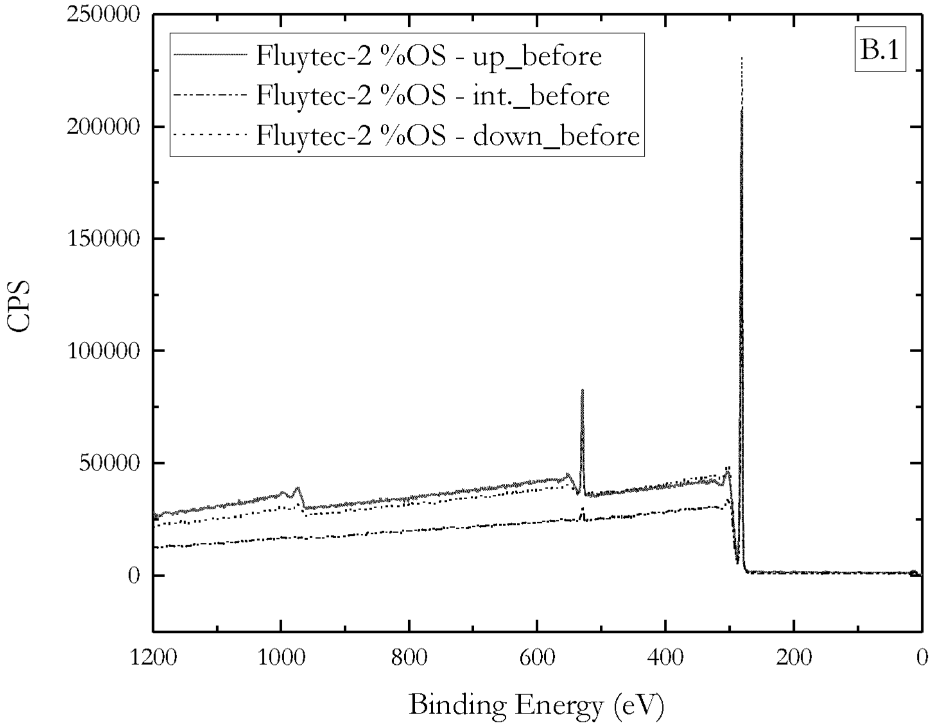
B.1
Fluytec-2 %OS - up_before
Fluytec-2 %OS - int._before
Fluytec-2 %OS - down_before
CPS
250000
200000
150000
100000
50000
0
1200
1000
800
600
400
200
0
Binding Energy (eV)

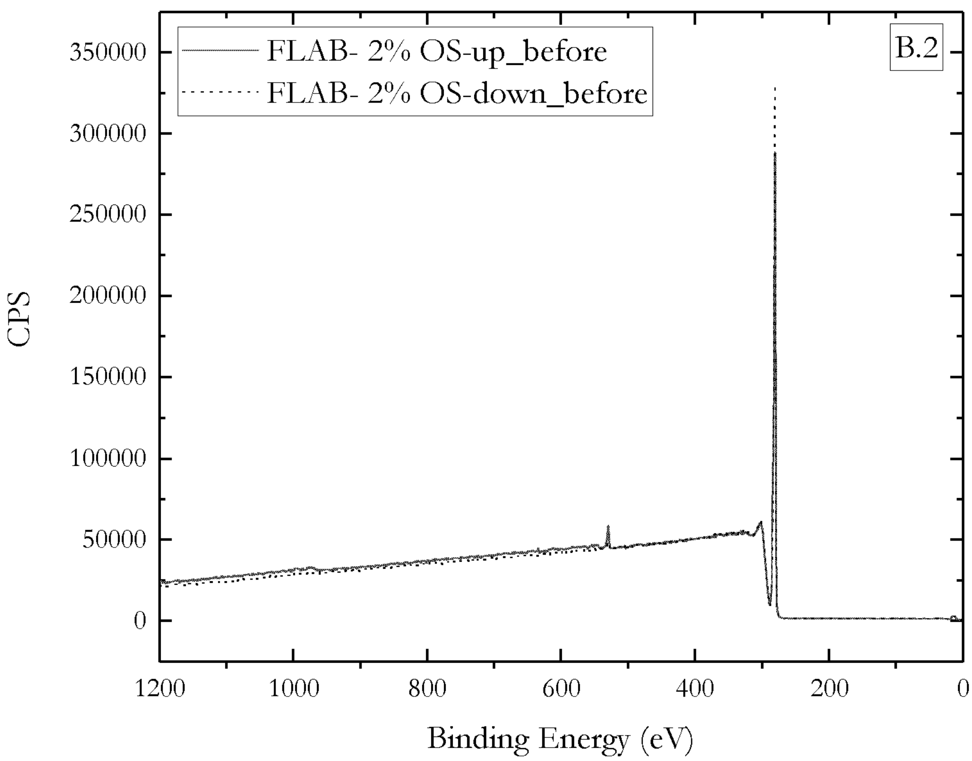
B.2
FLAB- 2% OS-up_before
FLAB- 2% OS-down_before
CPS
350000
300000
250000
200000
150000
100000
50000
0
1200
1000
800
600
400
200
0
Binding Energy (eV)

Figure 7 C

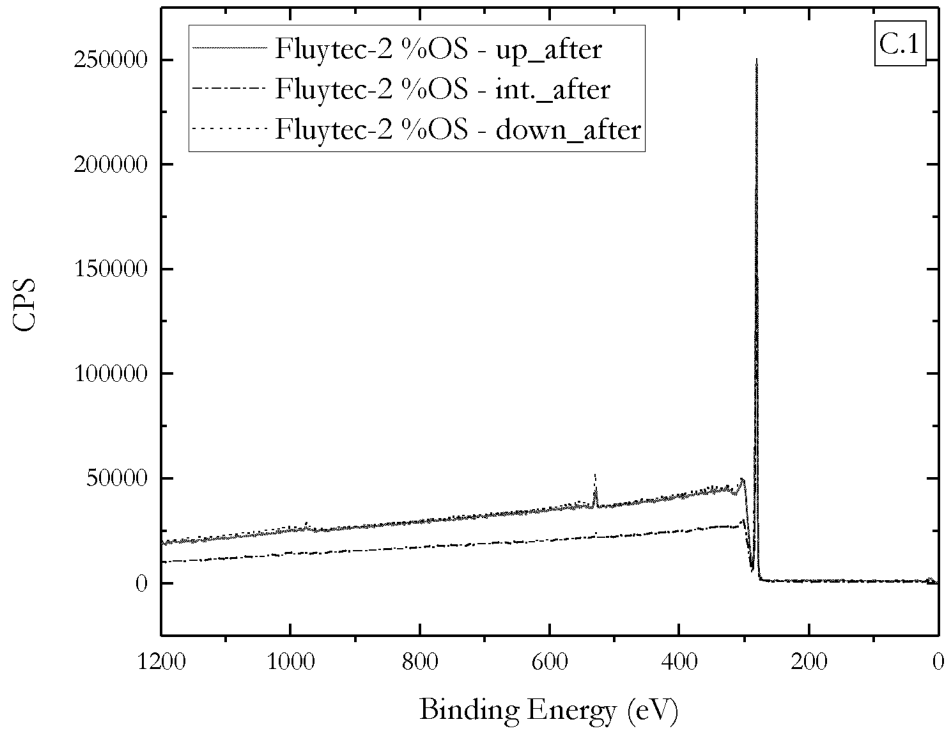
Fluytec-2 %OS - up_after
Fluytec-2 %OS - int._after
Fluytec-2 %OS - down_after
C.1
CPS
Binding Energy (eV)
250000
200000
150000
100000
50000
0
1200
1000
800
600
400
200
0

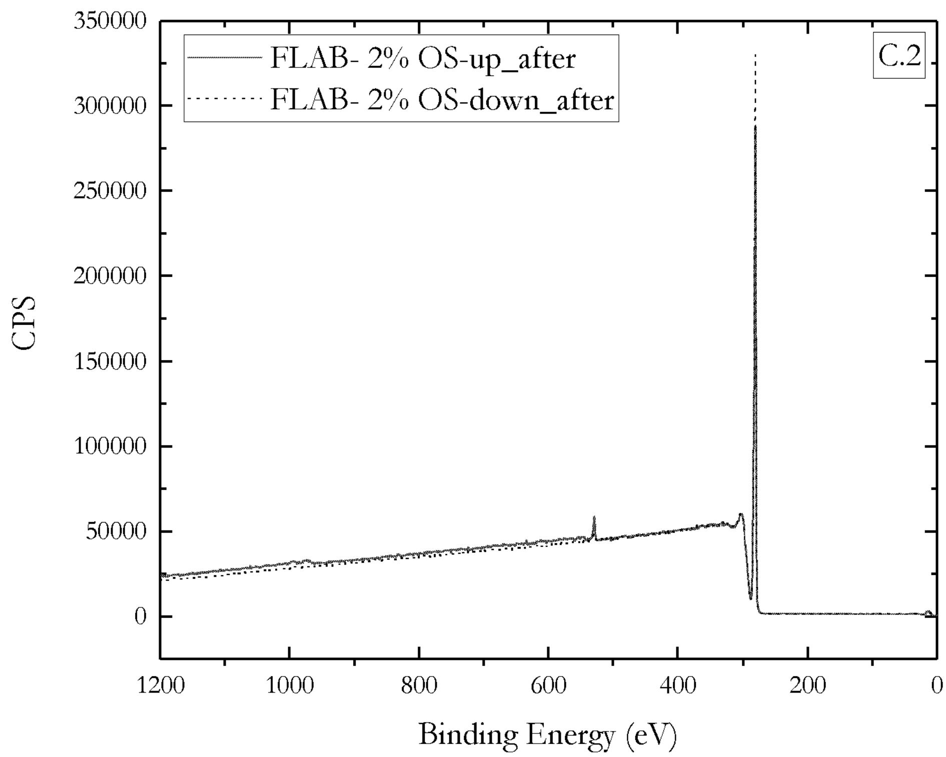
FLAB- 2% OS-up_after
FLAB- 2% OS-down_after
C.2
CPS
Binding Energy (eV)
350000
300000
250000
200000
150000
100000
50000
0
1200
1000
800
600
400
200
0

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 10472769 B2
- CN 107519768 B
- US 9415351 B
- US 7264728 B2
- WO 1999020378 A1
- CN 106310958 B
- CN 107349797 A
- US 2015265977 A1


### Non-patent literature cited in the description


- **AL-HOBAIB, A. S.** ; **J. EL GHOUL** ; **L. EI MIR**. Fabrication of Polyamide Membrane Reached by MgTiO3nanoparticles for Ground Water Purification. *Desalination and Water Treatment*, 2016, vol. 57 (19), 8639-48
- **DONG, LEI XI et al.** A Thin-Film Nanocomposite Nanofiltration Membrane Prepared on a Support with in Situ Embedded Zeolite Nanoparticles. *Separation and Purification Technology*, 2016, vol. 166, 230-39
- **FANG, BAOHONG et al.** Modification of Polyethersulfone Membrane by Grafting Bovine Serum Albumin on the Surface of Polyethersulfone/Poly(Acrylonitrile-Co-Acrylic Acid) Blended Membrane. *Journal of Membrane Science*, 2009, vol. 329 (1-2), 46-55
- **FURMIDGE, C. G.L.** Studies at Phase Interfaces. I. The Sliding of Liquid Drops on Solid Surfaces and a Theory for Spray Retention. *Journal of Colloid Science*, 1962, vol. 17 (4), 309-24
- **KIM, HYUN II** ; **SUNG SOO KIM**. Plasma Treatment of Polypropylene and Polysulfone Supports for Thin Film Composite Reverse Osmosis Membrane. *Journal of Membrane Science*, 2006, vol. 286 (1-2), 193-201
- **LI, QIANG et al.** Influence of Silica Nanospheres on the Separation Performance of Thin Film Composite Poly(Piperazine-Amide) Nanofiltration Membranes. *Applied Surface Science*, 2015, vol. 324, 757-64
- **LV, YAN et al.** Novel Nanofiltration Membrane with Ultrathin Zirconia Film as Selective Layer. *Journal of Membrane Science*, 2016, vol. 500, 265-71
- **MURPHY, FIONN** ; **CIARAN EWINS** ; **FREDERIC CARBONNIER** ; **BRIAN QUINN**. Wastewater Treatment Works (WwTW) as a Source of Microplastics in the Aquatic Environment. *Environmental Science and Technology*, 2016, vol. 50 (11), 5800-5808
- **PAN, YANG et al.** A Novel Antifouling and Antibacterial Surface-Functionalized PVDF Ultrafiltration Membrane via Binding Ag/SiO2 Nanocomposites. *Journal of Chemical Technology and Biotechnology*, 2017, vol. 92 (3), 562-72
- **SPORI, DORIS MADELEINE**. *Structural Influences on Self-Cleaning Surfaces*, 2010, 1-201
- **SUMISHA, ANAPPARA et al.** Functionalized Titanate Nanotube-Polyetherimide Nanocomposite Membrane for Improved Salt Rejection under Low Pressure Nanofiltration. *RSC Advances*, 04 February 2020, vol. 5 (49), 39464-73, www.rsc.org/advances
- **TANG, YONG JIAN et al.** Improving the Chlorine-Tolerant Ability of Polypiperazine-Amide Nanofiltration Membrane by Adding NH2-PEG-NH2 in the Aqueous Phase. *Journal of Membrane Science*, 2017, vol. 538, 9-17
- **WANG, SHENG YAO et al.** Novel Ultrafiltration Membranes with Excellent Antifouling Properties and Chlorine Resistance Using a Poly(Vinyl Chloride)-Based Copolymer. *Journal of Membrane Science*, 2018, vol. 549, 101-10
- **WANG, SONGHE et al.** Design and Preparation of Polypropylene Ultrafiltration Membrane with Ultrahigh Flux for Both Water and Oil. *Separation and Purification Technology*, 2020, vol. 238, 116455
- **WENTEN, I G et al.** Preparation of Antifouling Polypropylene/ZnO Composite Hollow Fiber Membrane by Dip-Coating Method for Peat Water Treatment. *Journal of Water Process Engineering*, 2020, vol. 34, 101158